# EUROPÄISCHE PATENTSCHRIFT

(11) **EP 1 426 131 B1**
(45) Veröffentlichungstag und Bekanntmachung des Hinweises auf die Patenterteilung: **01.03.2006**
(21) Anmeldenummer: 02027028.6
(22) Anmeldetag: 03.12.2002
(51) Int. Cl.: B23D 43/02, B23F 21/26

(54) **Innen-Räumwerkzeug**
Internal broaching tool
Outil de brochage interne

(43) Veröffentlichungstag der Anmeldung: 09.06.2004
(73) Patentinhaber: Forst Technologie GmbH & Co. KG, 42859 Solingen (DE)
(72) Erfinder: Weghaus, Norbert, 51399 Burscheid (DE); Pfitzer, Otto, 42719 Solingen (DE); Berktold, Andreas, Dr., 41460 Neuss (DE)
(74) Vertreter: Rau, Manfred

(56) Entgegenhaltungen:
- EP-A- 1 160 040
- EP-A- 1 317 982
- US-A- 4 274 767
- US-A1- 2002 015 622
- PATENT ABSTRACTS OF JAPAN vol. 012, no. 459 (M-770), 2. Dezember 1988 (1988-12-02) -& JP 63 185515 A (KOBE STEEL LTD), 1. August 1988 (1988-08-01)

## Beschreibung

Die Erfindung betrifft ein Innen-Räumwerkzeug zum Innen-Räumen von jeweils durch einen Profilgrund und Profilflanken begrenzten Profilen, insbesondere von Innenverzahnungen, in einem Werkstück gemäß dem Oberbegriff des Anspruchs 1.

Die zum Innen-Räumen von Profilen üblicherweise eingesetzten Innen-Räumwerkzeuge sind aus DIN 1415 (Ausgabe 1973), Blatt 1, Seite 2 bekannt. Sie weisen einen Schaft, einen Zahnungsteil und ein Endstück auf. Der Schaft wird von einem Schafthalter einer Räummaschine gehalten, welcher das Räumwerkzeug durch ein in der Räummaschine gehaltenes Werkstück zieht und hierbei die Profile räumt. Das Endstück wird nach dem Räumvorgang von einem Endstückhalter der Räummaschine ergriffen, der das Räumwerkzeug nach dem Räumvorgang in seine Ausgangsposition zurücktransportiert. Der Zahnungsteil weist entgegen der Räumrichtung hintereinander mehrere Reihen von Räumzähnen auf, und zwar in der Regel eine große Zahl solcher Reihen von Räumzähnen. Die Räumzähne weisen Profilgrund-Schneiden zum Schneiden des Profilgrundes eines Profils und Profilflanken-Schneiden zum Schneiden der Profilflanken des Profils auf. Die zum Schneiden eines Profils dienenden, entgegen der Räumrichtung hintereinander angeordneten und insoweit einander zugeordneten Räumzähne weisen eine Tiefenstaffelung, d. h. eine Durchmessersteigung auf, so dass alle zum Schneiden eines Profils dienenden Räumzähne nacheinander einen zur Erzeugung des Profilgrundes dienenden Span schneiden.

Da die Profilgrund-Schneiden die Hauptspanungsleistung erbringen, werden sie auch als Hauptschneiden bezeichnet. Soweit es um das Schneiden der Profilflanken des Profils geht, weisen die entgegen der Räumrichtung hintereinander angeordneten Räumzähne Profilflanken-Schneiden mit einem Profilgefälle auf, wie es in DIN 1415 (Ausgabe 1973), Blatt 1, Seite 3, Bild 11 dargestellt ist. Die Profilflanken-Schneiden werden auch als Nebenschneiden bezeichnet. Das Profilgefälle wird dadurch erzeugt, dass die Profilflanken-Schneiden eines nachfolgenden Räumzahns bezogen auf die Profilflanken-Schneiden eines voreilenden Räumzahns mit einer seitlichen Freilage versehen werden, so dass der nachfolgende Räumzahn nur in dem durch die Durchmessersteigung bzw. Tiefenstaffelung vorgesehenen Bereich mit seinen Profilflanken-Schneiden schneidet, während er in dem Bereich, in dem der voreilende Räumzahn mit seinen Profilflanken-Schneiden geschnitten hat, nicht zum Eingriff am Werkstück kommt. Hierdurch wird ein Klemmen der Räumzähne im Bereich der Profilflanken während des Räumvorganges verhindert. Die Profilflanken erhalten hierdurch eine treppenförmige Oberflächenstruktur.

Die mit dem bekannten und üblichen Innenräumwerkzeug erzeugten Profile weisen für normale Anwendungs- bzw. Bedarfsfälle eine ausreichende Oberflächengüte, Profilformgenauigkeit und Profilliniengenauigkeit auf. Während des Räumvorganges kann eine Verlagerung der Achse des Räumwerkzeuges stattfinden, so dass die nacheinander zum Eingriff kommenden Räumzähne jeweils eine unterschiedliche Mittenlage relativ zum zu räumenden Werkstück haben. Insbesondere beim Drallräumen (Schraubräumen) kann einer solchen Verlagerung der Achse des Räumwerkzeuges ein Torsionsfehler überlagert werden, welcher durch rotatorische Kräfte beim Drallräumen hervorgerufen wird. Die Profilgenauigkeit und die Oberflächengüte der Profilflanken sind hierbei oft nicht ausreichend, wenngleich die Flankenliniengenauigkeit in der Regel zufriedenstellend ist. Insbesondere bei Laufverzahnungen, z. B. innenverzahnten Zahnrädern mit einer Gerad- oder Schräg-Verzahnung, werden hohe Profilformgenauigkeiten und Flankenliniengenauigkeiten gefordert.

Um die geschilderten Mängel bei entsprechend hohen Anforderungen zu beseitigen, ist es bekannt, den mit Profilgefälle ausgestalteten Räumzähnen - bezogen auf die Räumrichtung - am Räumwerkzeug noch einen Kalibrierbereich nachzuordnen. Ein solcher Kalibrierbereich besteht aus mehreren hintereinander angeordneten Räumzähnen gleicher Höhe, die also den Profilgrund nicht nachschneiden. Sie weisen jedoch entgegen der Räumrichtung größer werdende Zahndicken auf, d. h. alle Kalibrier-Räumzähne schneiden über die volle Flankenhöhe der Profilflanke einen Span, dessen Spanungsdicke im allgemeinen 10 bis 20 µm beträgt. Die Kalibrier-Räumzähne müssen an jeder Profilflanken-Schneide mit einem Freischliff, d. h. einem Freiwinkel, versehen sein. Sie weisen also einen Hinterschliff auf. Durch das Kalibrierräumen wird eine gute Profilformgenauigkeit und eine hohe Oberflächengüte erreicht. Hinsichtlich der Flankenliniengenauigkeit tritt im Verhältnis zum zuvor in Tiefenstaffelung geräumten Profil eine Verschlechterung ein. Dies ergibt sich daraus, dass die hinterschliffenen Profilflanken-Schneiden der Kalibrierräumzähne scharfe Schneiden sind, deren Eigenführungsverhalten relativ schlecht ist.

Beim Wechsel vom tiefengestaffelten Räumen zum Vollformkalibrieren tritt systembedingt eine Räumkraftunterbrechung auf, die insbesondere beim Drallräumen zu erheblichen Nachteilen führt. Hierbei führt eine Entlastung der entgegen der Räumrichtung wirkenden Hauptschnittkraft auch zu einer Reduktion der Torsionsspannung, d. h. die relative Torsion zwischen Werkstück und Innen-Räumwerkzeug verändert sich. Diese Veränderung kann so stark sein, dass der Vollformkalibrierschneidteil nicht richtig in die mit Tiefenstaffelung geräumten Profile eingeführt wird und deshalb derart einseitig die Profilflanken anschneidet, dass das Profil nicht an seinen beiden Profilflanken kalibriert wird. Aufgrund der geschilderten Mängel des beim tiefengestaffelten Räumen erzeugten Profils schneiden die Profilflanken-Schneiden der Kalibrier-Räumzähne ungleichmäßig in die treppenförmig ausgebildeten Profilflanken, wodurch wiederum Torsionsschwingungen entstehen, die sich negativ auf die Profilliniengenauigkeit auswirken können.

Aus der US 2,986,801 ist ein Innen-Räumwerkzeug zum Innenräumen von jeweils durch einen Profilgrund und Profilflanken begrenzten Innenverzahnungen in einem Werkstück bekannt. Die Profilgrund-Schneiden hintereinander angeordneter und einander zugeordneter Räumzähne weisen eine positive Durchmessersteigung gegenüber den in Räumrichtung jeweils voreilenden Räumzähnen auf. Die Profilflanken-Schneiden hintereinander angeordneter und einander zugeordneter Räumzähne weisen über ihre volle Profilhöhe eine negative Profilsteigung auf. Dies heißt, dass hintereinander angeordnete Räumzähne bei zunehmendem Durchmesser jeweils schmalere Profile aufweisen. Die sich daraus ergebenden Nachteile entsprechen den oben zu DIN 1415 (Ausgabe 1973) beschriebenen Nachteilen.

Aus der EP 0 739 674 A (entsprechend US-A-5,865,569) ist es zur Beseitigung der vorstehend geschilderten Nachteile bei einem Innen-Räumwerkzeug der gattungsgemäßen Art bekannt geworden, eine höhere Oberflächengüte, Profilformgenauigkeit und Flankenliniengenauigkeit dadurch zu erreichen, dass die Profilflanken-Schneiden hintereinander angeordneter und einander zugeordneter Räumzähne über ihre volle Profilhöhe eine Profilsteigung aufweisen, die bezogen auf die Durchmesser-Steigung der Profilgrund-Schneiden klein ist. Bei dieser bekannten Ausgestaltung muß der Spankammer-Grund der Räumzähne auf jeden Fall unter dem Profilsteg, das heißt unter dem Kopfkreis des zu erzeugenden Profils liegen, da alle Profilflanken-Schneiden ihre untere Begrenzung am Profilsteg haben. Dies führt bei großen Höhen der zu erzeugenden Profile zu großen Zahn-Teilungen mit der Konsequenz, dass bei einer vorgegebenen Zahl von Räumzähnen das Räumwerkzeug zu lang wird. Wenn dagegen die ZahnTeilung trotz einer zu großen Höhe des zu erzeugenden Profils klein gemacht wird, kann dies zu Problemen beim Schleifen führen. In bestimmten Größenbereichen der Profile wird daher die Nutzung der Vorteile der gattungsgemäßen Ausgestaltung eingeschränkt. Der Einsatz dieser Räumwerkzeuge erfordert insbesondere beim Drallräumen Räummaschinen mit hoher Steifigkeit und exaktem Drallantrieb.

Zur Beseitigung der geschilderten Probleme ist es aus der EP 1 160 040 A 1 bereits bekannt geworden, bei einem Innen-Räumwerkzeug der gattungsgemäßen Art Räumzähne mit Profilflanken-Schneiden zu versehen, die sich an die Profilgrund-Schneiden anschließen. Die Höhe der Profilflanken-Schneiden ist erheblich kleiner als die Profiltiefe des zu räumenden Gesamt-Profils und erheblich größer als die Profilsteigung des einzelnen Räumzahns. Diese Teil-Profilflanken-Schneiden sind mit Flanken-Freiflächen versehen. Die sich an die Teil-Profilflanken-Schneiden anschließenden Seitenflächen der Räumzähne sind als freigelegte Flächen ausgebildet. Hierdurch soll eine gute Flankenliniengenauigkeit erreicht werden, da ein gutes Eigenführungsverhalten erwartet wird. Das Problem des Abtreibens eines Räumwerkzeugs, das heißt eines Abweichens der Mittel-Längs-Achse des Räumwerkzeugs aus ihrer Soll-Lage relativ zum Werkstück kann hierdurch aber auch nicht in zufriedenstellender Weise erreicht werden.

Aus der Stand der Technik nach Art. 54(3) EPÜ bildenden EP 1 317 982 A ist ein Innen-Räumwerkzeug nach dem Oberbegriff des Anspruches 1 bekannt, bei dem die ersten Seitenflächen als Führungs-Flanken ohne Freiwinkel und ohne Freilage ausgebildet sind, so dass die ersten Kanten als nichtschneidfähige, über der Profilsteigung zu schneidende Späne und damit die Profilflanke formende Führungs-Kanten ausgebildet sind. Die zweiten Seitenflächen sind zumindest benachbart zu den Profilgrund-Schneiden als Profilflanken-Schneiden-Freiflächen ausgebildet, wobei die zweiten Kanten zugeordnet zu den Profilgrund-Schneiden als schneidfähige Profilflanken-Schneiden ausgebildet sind.

Der Erfindung liegt daher die Aufgabe zugrunde, ein Innen-Werkzeug der gattungsgemäßen Art so auszugestalten, dass ein Abtreiben des Räumwerkzeugs während des Profilräumens vermieden beziehungsweise mindestens deutlich reduziert wird.

Diese Aufgabe wird erfindungsgemäß durch die Merkmale im Kennzeichnungsteil des Anspruches 1 gelöst. Eine der beiden Seitenfläche eines jeden Räumzahns weist weder einen Freiwinkel noch eine Freilage auf und ist daher eine nicht schneidfähige und nicht schneidende Führungs-Flanke. Die gegenüberliegende zweite Seitenfläche ist über ihre gesamte Höhe beziehungsweise Länge freigelegt. Sie ist also ebenfalls nicht schneidend, hat aber auch keine Berührung zur benachbarten zu räumenden Profilflanke. Das Räumen erfolgt ausschließlich mittels der Profilgrund-Schneide. Durch die erfindungsgemäßen Maßnahmen wird bewirkt, dass jede Verschiebung der Mittel-Längs-Achse des Räumwerkzeugs aus ihrer ursprünglichen Lage, also ihrer Soll-Lage, dadurch behindert oder zumindestens weitestgehend verhindert wird, dass bei einer solchen Bewegung die Führungs-Flanken etwa über den halben Werkzeug-Umfang an die entsprechenden Profilflanken des Werkstücks angedrückt werden. Da an den Führungs-Kanten der Führungs-Flanken keine Span-Abnahme erfolgt, kann diese seitliche Bewegung, also ein Abtreiben des Räumwerkzeuges, nicht stattfinden. Die Erfindung ist also dort besonders vorteilhaft, wo ein Räumwerkzeug über den Umfang verteilt mehrere Räumzähne aufweist.

Vorteilhafte Ausgestaltungen ergeben sich aus den Unteransprüchen. Insbesondere ist hervorzuheben, dass die erfindungsgemäßen Maßnahmen bei Räumwerkzeugen mit ringförmigen Spankammern und mit schraubenlinienförmig angeordneten Spankammern und bei Drall-Räumwerkzeugen mit drallförmigen Reihen von Räumwerkzeugzähnen angewendet werden können.

Weitere Merkmale, Vorteile und Einzelheiten der Erfindung ergeben sich aus der nachfolgenden Beschreibung von vier Ausführungsbeispielen anhand der Zeichnung. Es zeigt
- Fig. 1: ein erstes Ausführungsbeispiel eines Innen-Räumwerkzeugs in Längs-Draufsicht,
- Fig. 2: ein mit Profilen in Form einer Innenverzahnung versehenes Werkstück in Draufsicht,
- Fig. 3: einen Teil-Querschnitt durch das erste Ausführungsbeispiel eines Räumwerkzeugs im Eingriff in das Werkstück,
- Fig. 4: einen Teil-Längsschnitt durch das erste Ausführungsbeispiel,
- Fig. 5: einen Teil-Längsschnitt durch das erste Ausführungsbeispiel entsprechend der Schnittlinie V-V in Fig. 4,
- Fig. 6: ein zweites Ausführungsbeispiel eines Räumwerkzeugs in einer Längs-Draufsicht,
- Fig. 7: einen Teil-Längsschnitt durch das zweite Ausführungsbeispiel,
- Fig. 8: einen Teil-Längsschnitt durch das zweite Ausführungsbeispiel entsprechend der Schnittlinie VIII-VIII in Fig. 7,
- Fig. 9: ein drittes Ausführungsbeispiel eines Räumwerkzeugs in Längs-Draufsicht,
- Fig. 10: einen Teil-Längsschnitt durch das dritte Ausführungsbeispiel,
- Fig. 11: einen Teil-Längsschnitt durch das dritte Ausführungsbeispiel entsprechend der Schnittlinie XI-XI in Fig. 10,
- Fig. 12: ein viertes Ausführungsbeispiel eines Räumwerkzeugs in Längs-Draufsicht,
- Fig. 13: einen Teil-Längsschnitt durch das vierte Ausführungsbeispiel eines Räumwerkzeugs und
- Fig. 14: einen Teil-Längsschnitt durch das vierte Ausführungsbeispiel entsprechend der Schnittlinie XIV-XIV in Fig. 13.

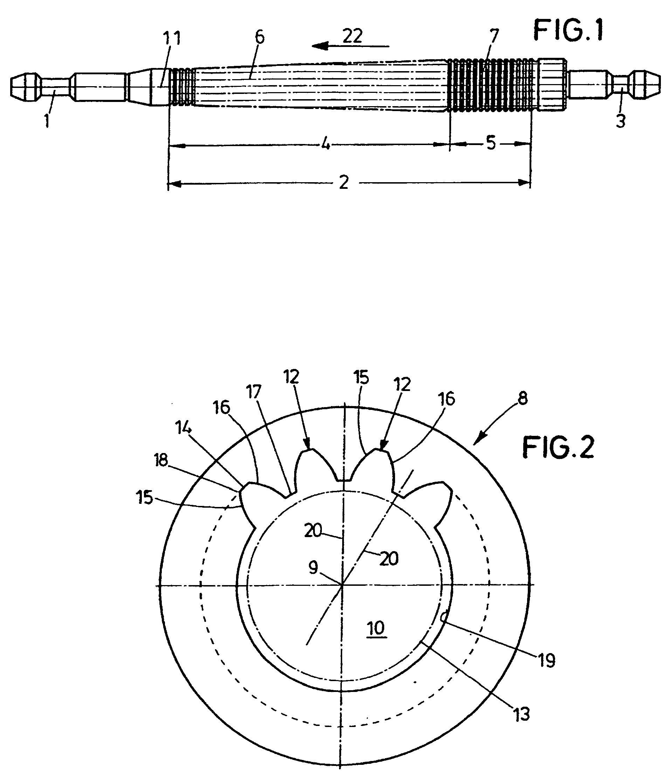

Das in Fig. 1 dargestellte und in seinem Grund-Aufbau bekannte Innen-Räumwerkzeug weist einen Schaft 1, einen Zahnungsteil 2 und hieran anschließend ein Endstück 3 auf. Der Zahnungsteil 2 besteht wiederum aus einem dem Schaft 1 folgenden Vor-Räumteil 4 und einem sich anschlie-ßenden, dem Endstück 3 vorgeordneten Kalibrier-Räumteil 5. Der Räumteil 4 weist zahlreiche Reihen 6 von weiter unten noch zu erläuternden Räumzähnen auf. Der Kalibier-Räumteil 5 weist ebenfalls eine Reihe von Reihen 7 von Kalibrierzähnen auf.

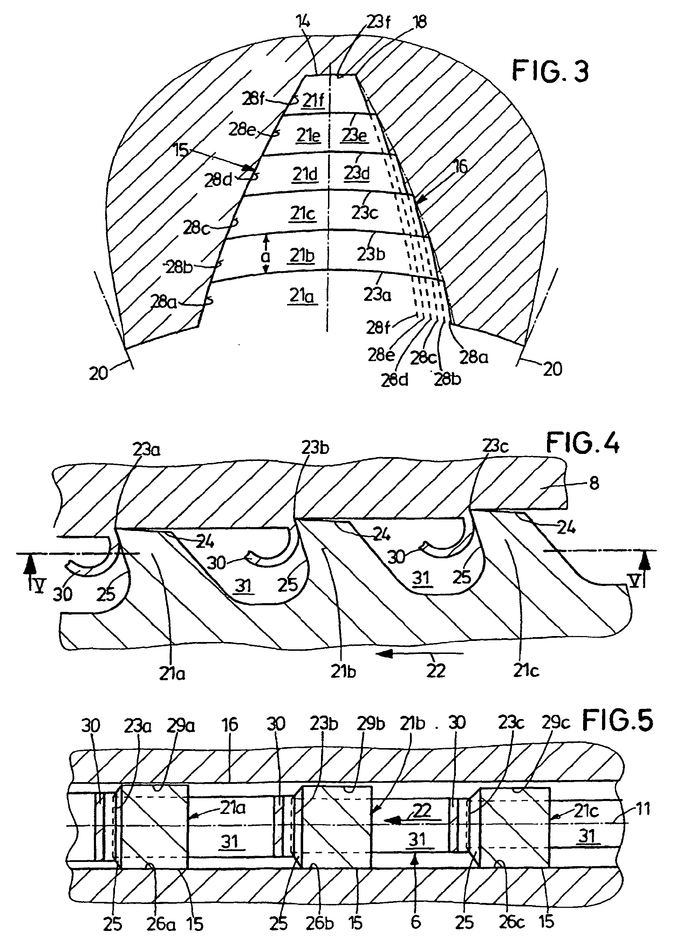

Mit dem Räumwerkzeug wird ein beispielsweise ringförmiges Werkstück 8 bearbeitet, das in Fig. 2 dargestellt ist. Dieses weist bereits vor dem Räumen eine zur Mittel-Längs-Achse 9 des fertig bearbeiteten Werkstücks 8 konzentrische Bohrung 10 auf. Das Werkstück 8 wird auf eine Werkstückvorlage einer Innen-Räummaschine gelegt; anschließend wird der Schaft 1 des Räumwerkzeugs durch die Bohrung 10 geführt und von einem Schafthalter der Räummaschine ergriffen, der in Richtung der Achse 11 des Räumwerkzeugs antreibbar ist und das Räumwerkzeug durch das Werkstück 8 zieht. Hierbei werden Profile 12, beispielsweise eine Innenverzahnung, in den Innenumfang 13 des Werkstücks 8 geräumt. Das Innen-Räumwerkzeug wird hierbei nicht zwangsgeführt; es tritt eine Eigenführung bzw. Eigenzentrierung zwischen Werkstück 8 und Räumwerkzeug ein, d.h. die Achse 11 des Räumwerkzeugs und die Achse 9 des Werkstücks 8 sollen grundsätzlich zusammenfallen. Das Endstück 3 dient primär zum Rücktransport des Innen-Räumwerkzeugs nach einem Räumhub. Das Räumwerkzeug kann nicht nur auf Zieh-Räummaschinen, sondern auch auf sogenannten Hebetisch-Räummaschinen und auf Druck-Räummaschinen eingesetzt werden.

Die zu räumenden Profile 12 weisen einen Profilgrund 14, zwei einander gegenüberliegende Profilflanken 15, 16 und einen Profilsteg 17 auf, der die einander benachbarten Profilflanken 15, 16 zweier einander benachbarter Profile 12 miteinander verbindet. Die Profilflanken 15, 16 eines Profils 12 bilden mit dem Profilgrund 14 eine Ecke 18. Beim Räumen der Profile 12 kann die Bohrung 10 zu einer durch die Profilstege 17 begrenzten Ausnehmung 19 aufgeweitet werden. Das Räumen des Werkstücks 8 im Bereich der zu erzeugenden Profilstege 17 wird nachfolgend nicht erläutert, da es für das Verständnis der Erfindung ohne Bedeutung ist. Es wird nachfolgend das Räumen eines Profils 12 beschrieben, das zwischen zwei Radien 20 durch die Achse 9 angeordnet ist, die jeweils an das Profil 12 anschließende Profilstege 17 halbieren.

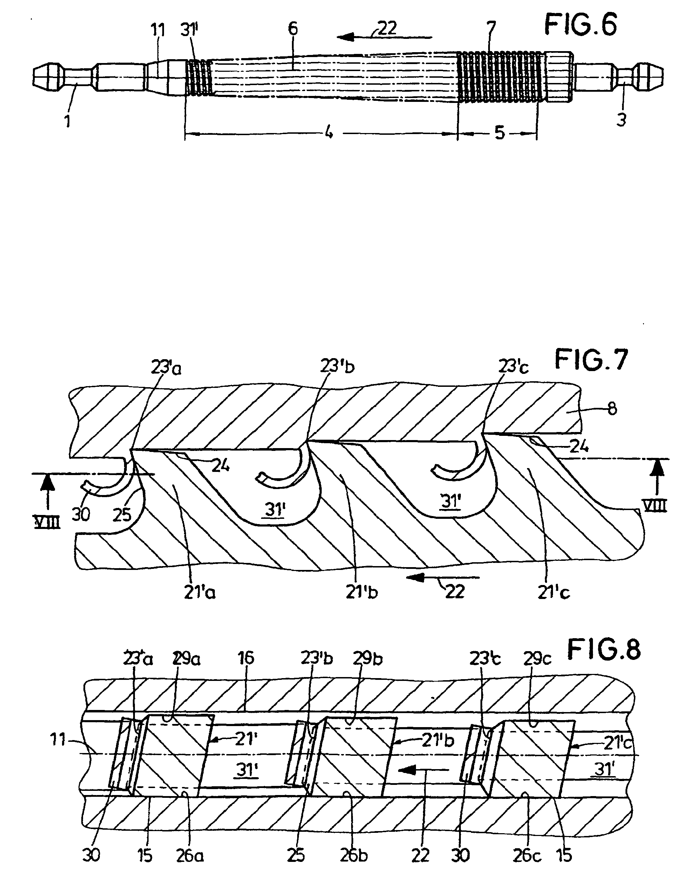

Ein erstes erfindungsgemäßes Ausführungsbeispiel eines Innen-Räumwerkzeugs nach den Fig. 3 bis 5 weist Räumzähne 21 auf, von denen ein erster Räumzahn mit 21a, weitere Räumzähne mit 21b, 21c, 21d, 21e und ein letzter Räumzahn mit 21f bezeichnet sind. Auch wenn insgesamt nur sechs Räumzähne 21 dargestellt sind, sind an einem praxisgemäßen Räumwerkzeug mindestens - abhängig von der zu erzeugenden Profiltiefe - die fünf- bis zwanzigfache Zahl von Räumzähnen im Räumteil 4 vorhanden. Die Räumzähne 21a bis 21f sind am Räumwerkzeug entgegen der Räumrichtung 22 angeordnet. Die Räumzähne 21a bis 21f weisen jeweils eine in der Praxis auch als Hauptschneide bezeichnete Profilgrund-Schneide 23a bis 23f auf, die einen Verlauf entsprechend einem zur Achse 11 konzentrischen Kreis aufweist. Die Profilgrund-Schneiden 23a bis 23f sind in üblicher Weise mit einem Freischliff, d.h. einem Freiwinkel, versehen. Sie weisen also eine Profilgrund-Schneiden-Freifläche 24 und eine Spanfläche 25 auf, wie aus Fig. 4 und 5 ersichtlich ist.

Die den zu erzeugenden Profilflanken 15, 16 des Werkstücks 8 zugeordneten Seitenflächen der Räumzähne 21 sind unterschiedlich ausgestaltet. Die einer - in Fig. 3 links dargestellten - Profilflanke 15 zugeordneten Seitenflächen der Räumzähne 21a bis 21f sind reine Führungs-Flanken 26a bis 26c. Ihr Verlauf entspricht also über der vollen Profilflankenhöhe dem Verlauf der zu erzeugenden Profilflanke 15. Sie weisen also keinen Freischliff bzw. Freiwinkel auf, sind also nicht als Freifläche ausgebildet, wie Fig. 5 entnehmbar ist, und weisen auch keine Freilage auf, wie ebenfalls Fig. 5 entnehmbar ist. Die Profilsteigung a liegt im Bereich von 10 bis 80 µm. Die Führungs-Kante 27a bis 27f zwischen der jeweiligen Führungs-Flanke 26a bis 26c und der Spanfläche 25 ist also eine nichtschneidende, d.h. nichtschneidfähige Kante 27a bis 27f.

Die gegenüberliegenden, der zu erzeugenden Profilflanke 16 zugeordneten, in Fig. 3 rechts dargestellten Kanten sind Freilage-Kanten 28a bis 28f. Das heißt, die sich an sie anschließenden, der zu erzeugenden Profilflanke 16 zugewandten Flächen sind Freilage-Flächen 29a bis 29c, die bis zur Ecke 18, also bis zur Durchdringung mit der Profilgrund-Schneide 23, nicht an der zur erzeugenden Profilflanke 16 anliegen. Demgegenüber erstrecken sich die Profilgrund-Schneiden 23a bis 23f jeweils über die volle Profilbreite b des an der jeweiligen Stelle vom jeweiligen Räumzahn 21a bis 21f zu erzeugenden Profils.

Wie Fig. 4 entnehmbar ist, wo nur drei Räumzähne 21a, 21b und 21c dargestellt sind, wird mit der jeweiligen Profilgrund-Schneide 23a bis 23c ein der Profilsteigung a entsprechender Span 30 beim Räumen geschnitten. Wie Fig. 5 entnehmbar ist, liegen die Führungs-Flanken 26a bis 26c mit der jeweiligen Führungs-Kante 27a bis 27c über ihre volle Länge ohne jede Profilflankensteigung an der zu erzeugenden Profilflanke 15 des Werkstücks 8 an. Im Bereich der Profilsteigung a wird der Span 30 und damit auch die Profilflanke 15 geformt, wobei wiederholt sei, dass der Schneidvorgang sich über die volle Profilbreite b erstreckt. Auch die Freilage-Kante 28a bis 28f ist also eine nicht-schneidende Kante. Die geschilderte Ausgestaltung betrifft ein Räumwerkzeug mit ringförmigen Spankammern 31 und einem geraden Profilverlauf, bei dem das Räumwerkzeug also ohne Relativdrehung zum Werkstück 8 bewegt wird. Die entgegen der Räumrichtung 22 hintereinander angeordneten Räumzähne 21 liegen also auf zur Achse 11 parallelen Reihen, wie sie in Fig. 1 angedeutet sind.

Wenn bei dieser Ausgestaltung des Räumwerkzeugs die Mittel-Längs-Achse 11 quer zu ihrer Soll-Lage relativ zur Achse 9 des Werkstücks 8 verschoben wird, dann werden etwa über den halben Umfang des Werkstücks 8 die Führungs-Flanken 26 des Räumwerkzeugs gegen die entsprechenden Profilflanken 15 des Werkstücks 8 gepresst. Da die Führungs-Flanken 26 mit ihren Führungs-Kanten 27 keinen Span abnehmen können, ist ein solches Abtreiben des Räumwerkzeugs relativ zum Werkstück 8 theoretisch nicht möglich und praktisch weitestgehend ausgeschlossen. Andererseits wird durch die Freilage der jeweils gegenüberliegenden Freilage-Fläche 29 mit Freilage-Kante 28 durch das Rückfederverhaltens des Werkstoffs des Werkstücks 8 bedingtes Klemmen ausgeschlossen.

Am Ende des Räumvorgangs mit dem Räumteil 4 sind die Profilflanken 15 und 16 fertig geschnitten. Es kann dann noch ein Kalibrieren mittels des Kalibrier-Räumteils 5 erfolgen, was von den Qualitätsanforderungen abhängt.

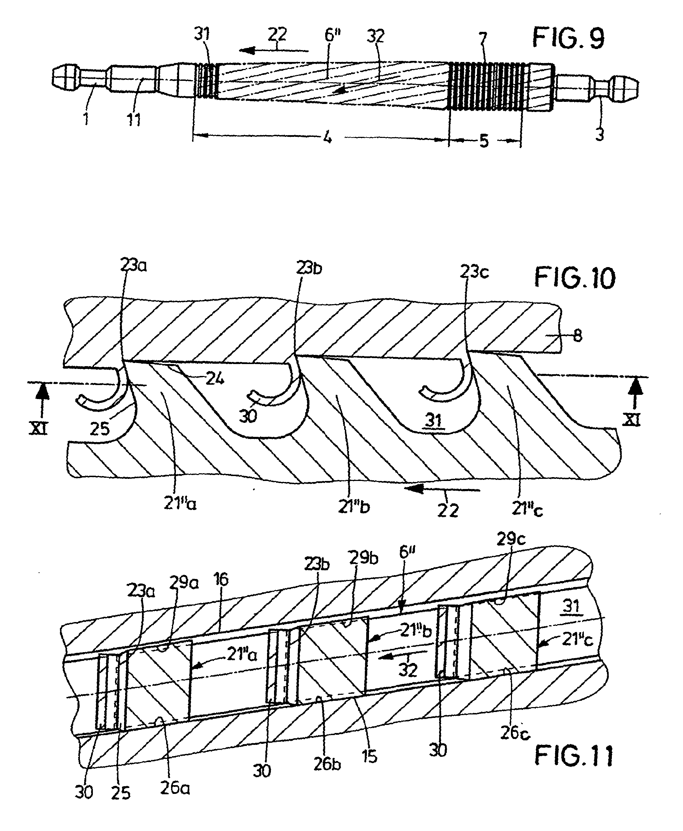

Das Ausführungsbeispiel nach den Fig. 6 bis 8 unterscheidet sich von dem nach den Fig. 3 bis 5 nur dadurch, dass die Spankammern 31*'* nicht ringförmig, sondern schraubenlinienförmig verlaufen. Die entgegen der Räumrichtung 22 hintereinander angeordneten Räumzähne 21'a bis 21'c sind jeweils auf Reihen 6 angeordnet, die zur Achse 11 parallel verlaufen. Lediglich aus Fig. 8 ist ersichtlich, dass die Profilgrund-Schneiden 23'a bis 23'c von der Führungs-Flanke 26a bis 26c aus zur Freilage-Fläche 29a bis 29c hin nacheilend ausgebildet sind, wodurch die Führungskräfte zwischen Führungsflanke 26a bis 26c und Profilflanke 15 noch verstärkt werden. Ansonsten gilt die vorherige Beschreibung. Auch die Darstellung nach Fig. 3 gilt hier.

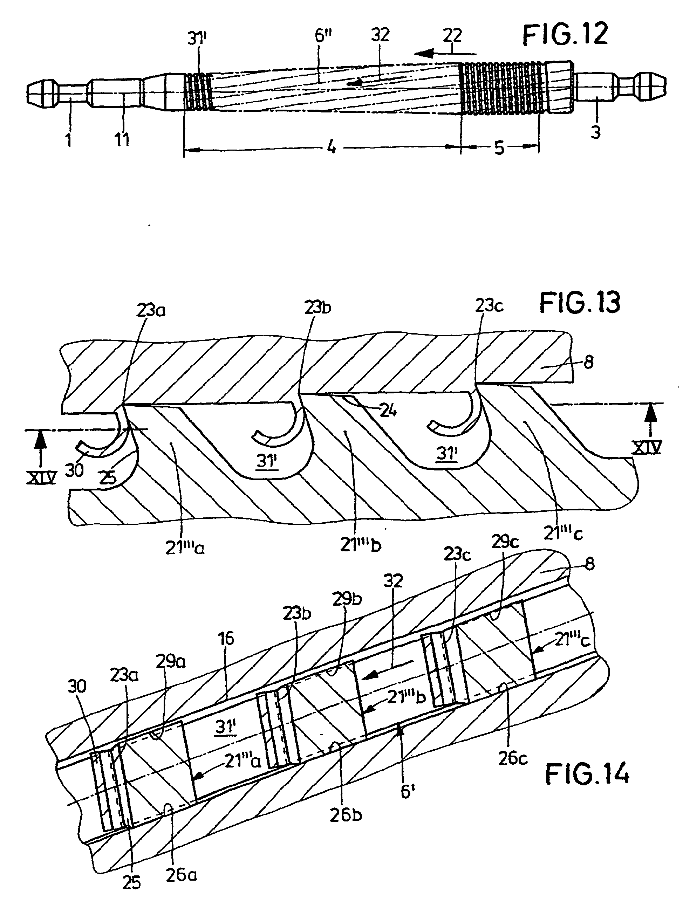

Bei dem Ausführungsbeispiel nach den Fig. 9 bis 11 sind wiederum die Spankammern 31 ringförmig angeordnet, was auch wiederum für die ringförmige Anordnung von Räumzähnen in Fig. 9 gilt. Die entgegen der Räumrichtung 22 hintereinander angeordneten Räumzähne 21"a bis 21"c sind aber wendelförmig beziehungsweise drallförmig angeordnet, wie dies durch die entsprechend drallförmigen Reihen 6" in Fig. 9 und 11 kenntlich gemacht ist. Die Drallrichtung 32 der Reihen 6" ist derart, dass der Druck zwischen den Führungs-Flanken 26a bis 26c und den Profilflanken 15 des Werkstücks 8 beim Räumhub verstärkt wird. Im Übrigen gilt auch hier die Darstellung gemäß Fig. 3.

Bei dem vierten Ausführungsbeispiel nach den Fig. 12 bis 14 ist zum einen ein schraubenlinienförmiger Verlauf der Spankammern 31' und entsprechend ein schraubenlinienförmiger Verlauf der Räumzähne 21'''a bis 21'''c vorgesehen, wie es in den Fig. 12 und 14 angedeutet ist. Des Weiteren ist ein drallförmiger beziehungsweise wendelförmiger Verlauf der Reihen 6' der hintereinander angeordneten Räumzähne 21'''a bis 21'''c vorgesehen. Insofern gilt die Beschreibung zum zweiten und dritten Ausführungsbeispiel, soweit anwendbar.

## Patentansprüche

1. Innen-Räumwerkzeug zum Innen-Räumen von jeweils durch einen Profilgrund (14) und Profilflanken (15, 16) begrenzten Profilen (12) von Innenverzahnungen eines Werkstückes (8),
- mit einem Schaft (1), der in einer Räumrichtung (22) voreilend ist und eine Mittel-Längs-Achse (9) aufweist und
- mit einem Zahnungsteil (2) mit mehreren entgegen der Räumrichtung (22) hintereinander angeordneten Reihen (6) von Räumzähnen (21a bis 21f),
- - wobei jeweils hintereinander angeordnete Räumzähne (21 a bis 21f) zum Räumen eines Profils (12) mit einer Profiltiefe einander zugeordnet sind,
- - wobei die Räumzähne (21a bis 21f) Profilgrund- Schneiden (23a bis 23f) und erste und zweite Seitenflächen aufweisen,
- - wobei die Profilgrund-Schneiden (23a bis 23f) hintereinander angeordneter und einander zugeordneter Räumzähne (21a bis 21f) eine Profilsteigung (a) gegenüber den in Räumrichtung (22)jeweils voreilenden Räumzähnen (21a bis 21f) aufweisen,
- - wobei den Profilgrund-Schneiden (23a bis 23f) jeweils eine Profilgrund-Schneiden-Freifläche (24) zugeordnet ist und
- - wobei die ersten und zweiten Seitenflächen die Profilgrund-Schneiden-Freiflächen (24) unter Bildung von ersten und zweiten Kanten durchdringen,
**dadurch gekennzeichnet,**
**dass** die ersten Seitenflächen als Führungs-Flanken (26a bis 26f) ohne Freiwinkel und ohne Freilage ausgebildet sind, sodass die ersten Kanten als nichtschneidfähige, über der Profilsteigung (a) zu schneidende Späne (30) und damit die Profilflanken (15) formende Führungs-Kanten (27a bis 27f) ausgebildet sind,
**dass** die zweiten Seitenflächen als Freilage-Flächen (29a bis 29c) aus gebildet sind, wobei die zweiten Kanten als nichtschneidende Freilage-Kanten (28a bis 28f) ausgebildet sind und
**dass** die Profilgrund-Schneiden (23a bis 23f) über die volle Profilbreite (b) schneidend ausgebildet sind.

2. Innen-Räumwerkzeug nach Anspruch 1, **dadurch gekennzeichnet, dass** die Führungs-Kanten (27a bis 27f) aufeinanderfolgender Räumzähne (21a bis 21f) keine Profilflankensteigung aufweisen.

3. Innen-Räumwerkzeug nach Anspruch 1 oder 2, **dadurch gekennzeichnet,**
**dass** die - bezogen auf die Räumrichtung (22) - nebeneinander angeordneten Räumzähne (21) ringförmig angeordnet sind und
**dass** entgegen der Räumrichtung (22) hintereinander angeordnete Räumzähne (21a bis 21f) in zur Mittel-Längs-Achse (9) parallelen Reihen (6) angeordnet sind.

4. Innen-Räumwerkzeug nach Anspruch 1 oder 2, **dadurch gekennzeichnet,**
**dass -** bezogen auf die Räumrichtung - nebeneinander angeordnete Räumzähne (21) schraubenlinienförmig angeordnet sind und
**dass** entgegen der Räumrichtung (22) hintereinander angeordnete Räumzähne (21a bis 21f) in zur Mittel-Längs-Achse (9) parallelen Reihen (6) angeordnet sind.

5. Innen-Räumwerkzeug nach Anspruch 1 oder 2, **dadurch gekennzeichnet,**
**dass** die - bezogen auf die Räumrichtung (22) - nebeneinander angeordneten Räumzähne (21") ringförmig angeordnet sind und
**dass** die entgegen der Räumrichtung (22) hintereinander angeordneten Räumzähne (21"a bis 21"c) in drallförmigen Reihen (6 ") angeordnet sind.

6. Innen-Räumwerkzeug nach Anspruch 1 oder 2, **dadurch gekennzeichnet,**
**dass** die - bezogen auf die Räumrichtung (22) - nebeneinander angeordneten Räumzähne (21''') schraubenlinienförmig angeordnet sind und
**dass** die entgegen der Räumrichtung (22) hintereinander angeordneten Räumzähne (21*'''*a bis 21*'''*c) in drallförmigen Reihen (6") angeordnet sind.

## Claims

1. An internal broach for internally broaching profiles (12), each defined by a bottom (14) and flanks (15, 16), of female serrations of a work piece (8), which broach comprises
- a shank (1), which leads in a direction of broaching (22) and has a central longitudinal axis (9); and
- a toothed section (2) with several rows (6) of broach cutting teeth (21a to 21f), the rows (6) being disposed successively counter to the direction of broaching (22);
-- wherein successive broach cutting teeth (21 a to 21f) are allocated to each other for broaching a profile (12) of a depth;
-- wherein the broach cutting teeth (21a to 21f) have bottom cutting blades (23a to 23f) and first and second sides;
-- wherein the bottom cutting blades (23a to 23f) of successive, associated broach cutting teeth (21a to 21f) have a pitch (a) relative to the broach cutting teeth (21a to 21f) which lead in the direction of broaching (22);
-- wherein a bottom-cutting-blade relief surface (24) is allocated to the respective bottom cutting blades (23a to 23f); and
-- wherein the first and second sides pass through the bottom-cutting-blade relief surfaces (24), thus forming first and second edges;
**characterized**
**in that** the first sides are guide flanks (26a to 26f) without any relief angle and relief so that the first edges are guide edges (27a to 27f) without cutting ability which form chips (30) to be cut via the pitch (a) and thus the flanks (15);
**in that** the second sides are relieved surfaces (29a to 29c), with the second edges being non-cutting relieved edges (28a to 28f) and
**in that** the bottom cutting blades (23a to 23f) are designed for cutting over the full profile width (b).

2. An internal broach according to claim 1, **characterized**
**in that** the guide edges (27a to 27f) of successive broach cutting teeth (21a to 21f) have no flank pitch.

3. An internal broach according to claim 1 or 2, **characterized**
**in that** the - related to the direction of broaching (22) - side by side broach cutting teeth (21) are disposed annularly; and
**in that** - counter to the direction of broaching (22) - successive broach cutting teeth (21a to 21f) are disposed in rows (6) that are parallel to the central longitudinal axis (9).

4. An internal broach according to claim 1 or 2, **characterized**
**in that** - related to the direction of broaching - side by side broach cutting teeth (21) are disposed helically; and
**in that** - counter to the direction of broaching (22) - successive broach cutting teeth (21a to 21f) are disposed in rows (6) that are parallel to the central longitudinal axis (9).

5. An internal broach according to claim 1 or 2, **characterized**
**in that** the - related to the direction of broaching (22) - side by side broach cutting teeth (21") are disposed annularly; and
**in that** - counter to the direction of broaching (22) - successive broach cutting teeth (21"a to 21"c) are disposed in twist-style rows (6").

6. An internal broach according to claim 1 or 2, **characterized**
**in that** the - related to the direction of broaching (22) - side by side broach cutting teeth (21''') are disposed helically; and
**in that** the - counter to the direction of broaching (22) - successive broach cutting teeth 21"'a to 21"'c) are disposed in twist-style rows (6").

## Revendications

1. Outil de brochage interne pour le brochage interne de profils (12) de dentures intérieures d'une pièce à brocher (8), délimités respectivement par un fond de profil (14) et des flancs de profil (15, 16),
- avec une tige (1) avancée dans un sens de brochage (22) et qui présente un axe central longitudinal (9) et
- avec une pièce de denture (2) avec plusieurs rangées (6) de dents de brochage (21a à 21f) disposées les unes derrière les autres en sens inverse du sens de brochage (22) ;
- dans lequel des dents de brochage (21a à 21f) disposées respectivement les unes derrière les autres sont ajoutées pour le brochage d'un profil (12) avec une profondeur de profil,
- dans lequel les dents de brochage (21a à 21f) présentent des découpes de fond de profil (23a à 23f) ainsi qu'une première et une deuxième surface latérale,
- dans lequel les découpes de fond de profil (23a à 23f) des dents de brochage disposées les unes derrière les autres et ajoutées les unes aux autres (21a à 21f) présentent une inclinaison de profil (a) par rapport aux dents de brochage avancées respectivement (21a à 21f) dans le sens de brochage (22),
- dans lequel une face de dépouille de découpe de fond de profil (24) est ajoutée respectivement aux découpes de fond de profil (23a à 23f) et
- dans lequel les premières et deuxièmes faces latérales pénètrent dans les faces de dépouilles de découpe de fond de profil (24) formant ainsi des premiers et des deuxièmes bords,
**caractérisé en ce que**
les premières faces latérales sont configurées comme des flancs de guidage (26a à 26f) sans angle de dépouille, ni dépouille de sorte que les premiers bords sont configurés comme des copeaux non tranchants (30) devant être coupés au-delà de l'inclinaison du profil (a) et avec cela les bords de guidage (27a à 27f) formant des flancs de profil (15), et **en ce que**
les deuxièmes faces latérales sont configurées comme des faces de dépouille (29a à 29c) sachant que les deuxièmes bords sont configurés comme des bords de dépouille non tranchants (28a à 28f) et **en ce que**
les découpes de fond de fond de profil (23a à 23f) sont configurées sur toute la largeur du profil (b) de manière tranchante.

2. Outil de brochage interne selon la revendication 1, **caractérisé en ce que** les bords de guidage (27a à 27f) des dents de brochage successives (21a à 21f) ne présentent aucune inclinaison de flancs de profil.

3. Outil de brochage interne selon la revendication 1 ou 2, **caractérisé en ce que** les dents de brochage sont disposées les unes à côté des autres (21) de manière circulaire, par rapport au sens de brochage (22), et **en ce que** des dents de brochage disposées les unes derrière les autres (21a à 21f) en sens inverse du sens de brochage (22) sont disposées en rangées parallèles (6) par rapport à l'axe central longitudinal (9).

4. Outil de brochage interne selon la revendication 1 ou 2, **caractérisé en ce que** des dents de brochage sont disposées les unes à côté des autres (21) de manière hélicoïdale, par rapport au sens de brochage (22), et **en ce que** des dents de brochage disposées les unes derrière les autres (21a à 21f) dans le sens inverse du sens de brochage (22) sont disposées en rangées parallèles (6) par rapport à l'axe central longitudinal (9).

5. Outil de brochage interne selon la revendication 1 ou 2, **caractérisé en ce que** les dents de brochage (21*"*), par rapport au sens de brochage (22), sont disposées les unes à côté des autres de manière circulaire et **en ce que** les dents de brochage disposées les unes derrière les autres (21"a à 21"c) dans le sens inverse du sens de brochage (22) sont disposées en rangées formant une torsion (6*"*).

6. Outil de brochage interne selon la revendication 1 ou 2, **caractérisé en ce que** les dents de brochage (21*'''*) sont disposées les unes à côté des autres, par rapport au sens de brochage (22), de manière hélicoïdale et **en ce que** les dents de brochage disposées les unes derrière les autres (21*'''*a à 21*'''*c) dans le sens inverse du sens de brochage (22) sont disposées en rangées formant une torsion (6").
